# EUROPEAN PATENT APPLICATION

(11) **EP 4 092 885 A1**
(43) Date of publication of application: **23.11.2022**
(21) Application number: 21174404.0
(22) Date of filing: 18.05.2021
(51) Int. Cl.: H02K 9/22, H02K 3/24, H02K 3/52, H02K 9/02

(54) **COOLING AT THE AXIAL ENDS OF AN ELECTRIC GENERATOR**

(71) Applicant: Siemens Gamesa Renewable Energy A/S, 7330 Brande (DK)
(72) Inventor: Nilifard, Reza, 5000 Odense C (DK)
(74) Representative: SGRE-Association

(57) **Abstract**

An electrical generator (10) comprises a stator (20) having a stator body (21) extending axially along a longitudinal axis (Y) between a first axial end plate (22) and a second axial end plate (22), the stator body (21) including a plurality of slots (30), the plurality of slots (30) being circumferentially distributed around the longitudinal axis (Y) of the stator body (21). The stator (20) includes a plurality of windings (17) housed in the plurality of slots (30) and a plurality of end-windings (18) axially protruding from the first axial end plate (22) or the second axial end plate (22), each end winding (18) having a curved shape and connecting the windings (17) in two slots (30) of said plurality of slots (30). The stator body (21) comprises at least one cooling fin (51a, 51b, 51c, 51d) axially protruding from at least one of the first axial end plate (22) and the second axial end plate (22), the cooling fin (51a, 51b, 51c, 51d) being arranged in at least a portion of the first axial end plate (22) or the second axial end plate (22) at an inside of at least one respective end-winding (18).

## Description

### Field of invention

The present invention relates to an electric generator having provisions for cooling the axial ends of the stator, from which end-windings protrude. The present invention may be particularly, but not exclusively, applied to the electric generator of a wind turbine.

### Art Background

An electric generator or motor, such as an electric generator installed in a wind turbine, typically comprises a rotor which rotates relative to a stator. In a permanent-magnet electric generator installed in a wind turbine rotor the rotor comprises a plurality of permanent magnets. The stator typically includes a body having stator slots extending along an axial direction of the stator and an electric circuit comprising a plurality of copper coils housed in the slots. The windings comprise end-windings axially protruding from the axial ends of the stator body. Each end-winding is normally shaped as a curve of copper wire in air connecting the wires in two respective stator slots. The windings of the above-described electric generator or motor may be classified as concentrated or distributed. In a concentrated winding scheme turns are wound together in series to form one multi-turn coil, which is housed in two adjacent slots. In a distributed winding scheme, all the winding turns are arranged in several coils and each coil is housed in different slots, which are not adjacent to each other.

Typically, in all the above-described types of electric generators, the end-windings are the portions of the coil windings, which reach the highest temperatures. A proper cooling of the end-windings has therefore to be provided. Guides may be provided inside or outside the end-windings for guiding a cooling flow, as shown in EP 3537571.

### Summary of the invention

Scope of the present invention is to provide cooling devices for the end windings of an electrical generator, which may be used for optimizing or improving the amount of heat removed from the end-windings, with respect to the solutions provided in the known art.

This scope is met by the subject matter according to the independent claim. Advantageous embodiments of the present invention are described by the dependent claims.

According to the invention, it is provided an electrical generator comprising a stator having a stator body extending axially along a longitudinal axis between a first axial end plate and a second axial end plate, the stator body including a plurality of slots, the plurality of slots being circumferentially distributed around the longitudinal axis of the stator body. The stator includes a plurality of windings housed in the plurality of slots and a plurality of end-windings axially protruding from the first axial end plate or the second axial end plate, each end winding having a curved shape and connecting the windings in two slots of said plurality of slots. The stator body comprises at least one cooling fin axially protruding from at least one of the first axial end plate and the second axial end plate, the cooling fin being arranged in at least a portion of the first axial end plate or the second axial end plate at an inside of at least one respective end-winding.

In the context of the present invention "inside" and "outside" is referred to the curves shape of the end-windings. In other words, the "inside" of an end-winding is the volume of air comprised between the end-winding and the stator, while the "outside" of an end-winding is the volume of air extending outwardly from the end-winding. With "outwardly" it is meant a direction oriented from the stator, in particular along the rotational axis of the rotor of the electric generator.

Advantageously, one or more cooling fins provided on one or both of the axial end plates inside the end-winding increase the surface of the axial plates, thus permitting an increased thermal exchange with a cooling medium. Such fins increase the turbulence of the cooling medium. The cooling fin arrangement according to the present invention increases the performance of the stator cooling system, thus achieving a temperature reduction. This leads to an increase of the lifetime of the winding insulation due to a lower temperature. Further power can be performed by the same generator size, thus increasing the annual energy product (AEP). The terms "axial", "radial" and "circumferential" in the following are made with reference to the longitudinal axis.

This invention can be efficiently adapted to an electric generator of a wind turbine.

According to the embodiments of the invention, the cooling fin(s) can be arranged in respective configurations. Each configuration may include any number of cooling fins oriented and disposed according to a respective pattern. For example, at least one cooling fin may be oriented radially with respect to the longitudinal axis. According to another embodiment, at least one cooling fin may be inclined with respect to a radial direction orthogonal to the longitudinal axis. The cooling fin(s) may be for example inclined of an angle of 45 degrees with respect to the radial direction. According to yet another embodiment, at least one cooling fin may be shaped like the letter "V", i.e., with two inclined sides departing from one vertex. The axis of symmetry of such V-shaped cooling fin may be oriented radially with respect to the longitudinal axis.

According to a further another embodiment, at least one cooling fin has a longitudinal section comprising an inclined face for guiding an incoming cooling flow. The inclined face may be linear or curved. The longitudinal section of the cooling fin may have a triangular shape having an inclined side facing an incoming cooling flow. A cooling fin having an inclined face for guiding an incoming cooling flow provides both cooling to the end plate and guidance for the cooling flow. Such a shape minimizes the generated pressure drop and resistance due to the adding of cooling fins to the end plate.

According to embodiments of the invention, the cooling fin(s) may be provided as an integral part of the first axial end plate or the second axial end plate. This allows the cooling fin(s) to be provided at the desired location axial end of the stator when the axial end plates are assembled.

According to other embodiments of the invention, in particular where the cooling fins are arranged according to configurations which do not allow the cooling fin(s) to be provided as an integral part of the first axial end plate or the second axial end plate, the cooling fin(s) may be attached to the first axial end plate or the second axial end plate, for example using bolts or a resin as fixing means. In such embodiment, the cooling fin(s) may be made of aluminum or other material having a high thermal conductivity.

According to embodiments of the invention, the cooling fin(s) extends radially beyond the inside of the end-windings, in particular between the end-windings and the longitudinal axis of the stator.

According to embodiments of the invention, the windings are concentrated windings, each end-winding connecting the windings in two circumferentially adjacent slots. According to other embodiments of the invention, the windings are concentrated windings, each end-winding connecting the windings in two not-adjacent slots.

The stator according to the present invention may have a segmented structure comprising a plurality of circumferential segments joined together at respective circumferential ends.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including an electric generator according to the present invention.
- Figure 2: shows a partial axonometric view of a stator of an electric generator according to the present invention.
- Figure 3: shows a partial axonometric view of a first embodiment of the stator of figure 2.
- Figure 4: shows another partial axonometric view of the first embodiment of figure 3.
- Figure 5: shows a partial axonometric view of a second embodiment of the stator of figure 2.
- Figure 6: shows another partial axonometric view of the second embodiment of figure 5.
- Figure 7: shows a partial axonometric view of a third embodiment of the stator of figure 2.
- Figure 8: shows another partial axonometric view of the third embodiment of figure 7.
- Figure 9: shows a longitudinal section of a fourth embodiment of the stator of figure 2.

### Detailed Description

The illustrations in the drawings are schematic. It is noted that in different figures, similar or identical elements are provided with the same reference signs.

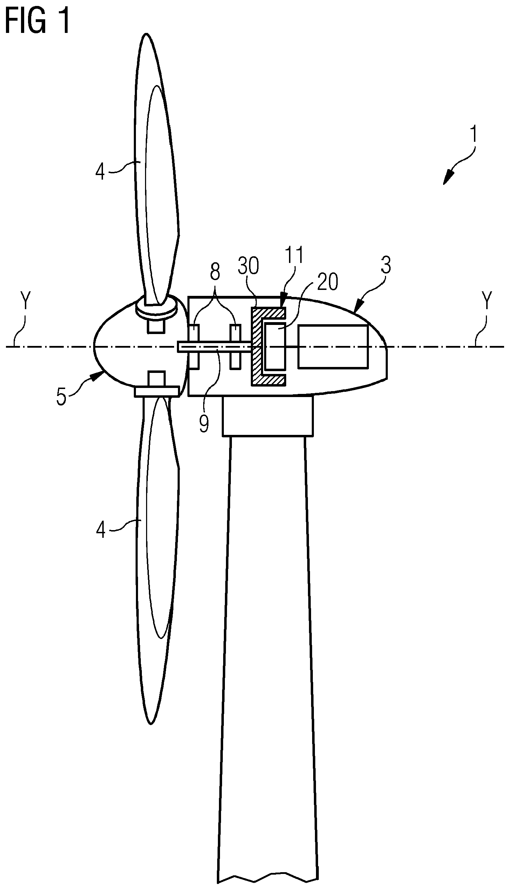

**Figure 1** shows a wind turbine 1 according to the invention. The wind turbine 1 comprises a tower 2, which is mounted on a non-depicted fundament. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a rotational longitudinal axis Y. When not differently specified, the terms axial, radial and circumferential in the following are made with reference to the longitudinal axis Y. The blades 4 extend radially with respect to the rotational axis Y. The wind turbine 1 comprises a permanent magnet electric generator 10.

According to other possible embodiments of the present invention (not represented in the attached figures), the present invention may be applied to other types of electric machine design, e.g. induction, synchronous, etc. The present invention may be applied to both integral-slot and fractional-slot electric generators. The wind rotor 5 is rotationally coupled with the permanent magnet generator 10 by means of a rotatable main shaft 9. According to other possible embodiments of the present invention (not represented in the attached figures), the wind rotor 5 is rotationally coupled directly with the permanent magnet generator 10 (direct-drive generator configuration). A schematically depicted bearing assembly 8 is provided in order to hold in place the rotor 5. The rotatable main shaft 9 extends along the rotational axis Y. The permanent magnet electric generator 10 includes a stator 20 and a rotor 40. The rotor 40 is rotatable with respect to the stator 11 about the rotational axis Y. The rotor 40 is radially external with respect the stator 20 and rotatable about the rotational axis Y. A circumferential air gap 19 is provided between the stator 20 and the rotor 40.

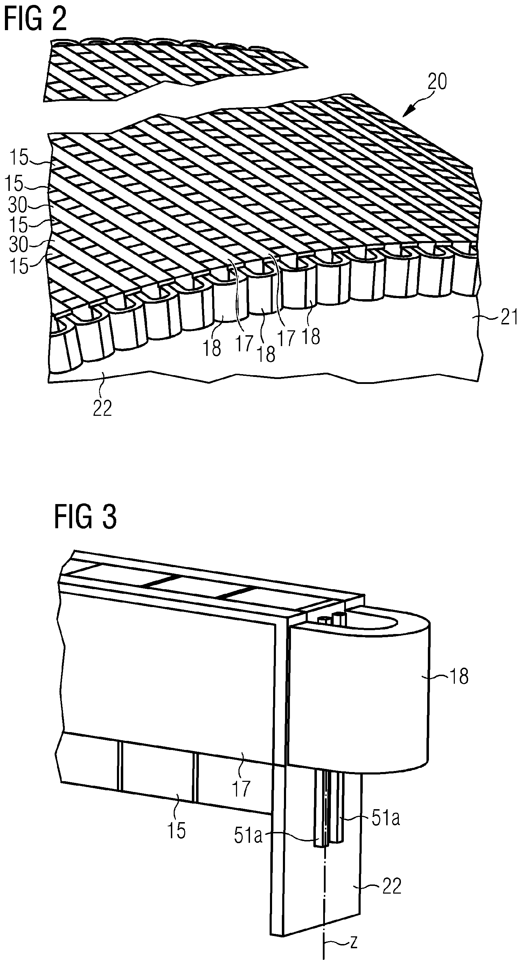

**Figure 2** shows a partial circumferential view of the stator 20. According to embodiments of the present invention, the stator 20 is a segmented comprising a plurality of circumferential embodiments. For such embodiments, figure 2 may represent the axonometric view of a single segment. The stator 20 includes a stator body 21 having a plurality of radial stator teeth 15 and a plurality of intermediate slots 30, each slot 30 circumferentially extending between two respective teeth 15. The stator 20 has a stator body 21 extending axially between a first axial end plate 22 and a second axial end (axial opposite to the first axial end plate and not visible in figure 2). The stator body 21 may have a laminated structure comprising a plurality of laminations stacked along the longitudinal axis Y. The laminations are identical, and each includes a plurality of teeth alternated to a plurality of slots. The first and the second axial end plate 22 are respectively provided at the two axial ends of the stator body 21. The first and the second axial end plate 22 may have a fingered shape comprising a plurality of fingers, each finger being axially aligned with a respective tooth 15 of the stator body 21. The first and the second axial end plate 22 may have a solid or laminated structure comprising a plurality of laminations stacked along the longitudinal axis Y. The stator 20 includes a plurality of windings 17 housed in the plurality of slots 30 and a plurality of end-windings 18, each end winding 18 having a curved shape and connecting the windings 17 in two slots 30 of said plurality of slots 30.

In the embodiment of the present invention represented in figure 2, a concentrated windings scheme is represented, where each end-winding 18 connects the axial ends of two concentrated windings 17 in two respective circumferentially adjacent slots 30. In other embodiments of the present invention (not represented) a distributed windings scheme may be used.

According to the present invention, the stator body 21 further comprises one or more cooling fins axially protruding from the first axial end plate 22 or the second axial end plate, the cooling fin being arranged in at least a portion of the first axial end plate or the second axial end plate at an inside of at least one respective end-winding. A plurality of fins 51a, 51b, 51c may be provided at one or both the first and second axial end plate 22.

**Figures 3** to **8** show three configurations of respective pluralities of cooling fins 51a, 51b, 51c provided at the first axial end plate 22. The same configurations may be provided also at the second axial end plate (not shown in the figures 3 to 8). Alternatively, the second axial end plate may be provided with a different configuration of cooling fins. Each of the figures 3 to 8 show a portion of the stator 20 showing one tooth 15, two slots 30 adjacently thereto, a portion of the first axial end plate 22, two concentrated windings 17 and one end-winding 18, which axially protrudes from the stator for connecting the two windings 17. The cooling fin 51a, 51b, 51c may an integral part of the first axial end plate. Alternatively, the cooling fins 51a, 51b, 51c may attached to the first axial end plate, for example using bolts or a resin. The cooling fins 51a, 51b, 51c may be made of the same material of first axial end plate 22 or another different material. The cooling fins 51a, 51b, 51c may be for example made of aluminum or other material having a high thermal conductivity. The cooling fins 51a, 51b, 51c radially extend beyond the end-windings 18 towards the center of the rotor 20, i.e., towards the longitudinal axis Y. According to another embodiment of the present invention (not shown), the cooling fins 51a, 51b, 51c may be provided at the inside of each end-winding 18.

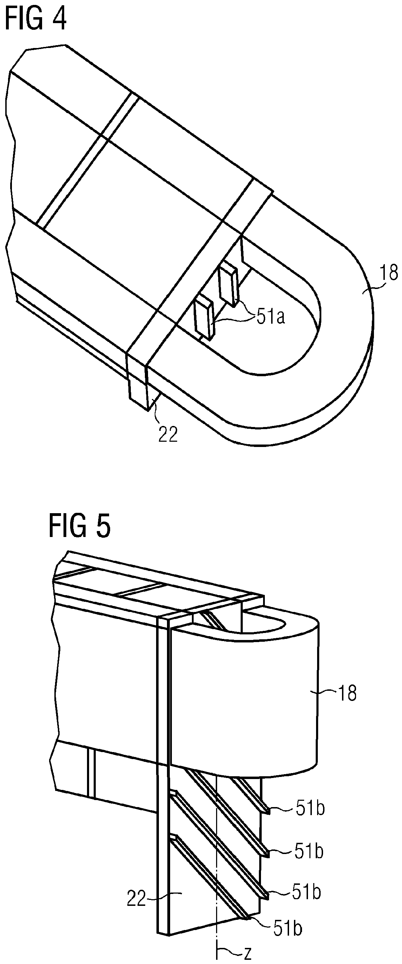

**Figures 3** and **4** show a first configuration of a first plurality of cooling fins 51a (two cooling fins 51a are shown in the embodiment of figure 2). The first cooling fins 51a are oriented parallel to a radial direction Z, orthogonal to the longitudinal axis Y. According to other embodiments of the present invention (not shown), any other number of first cooling fins 51a may be provided (for example one cooling fin 51a or more than two cooling fins 51a).

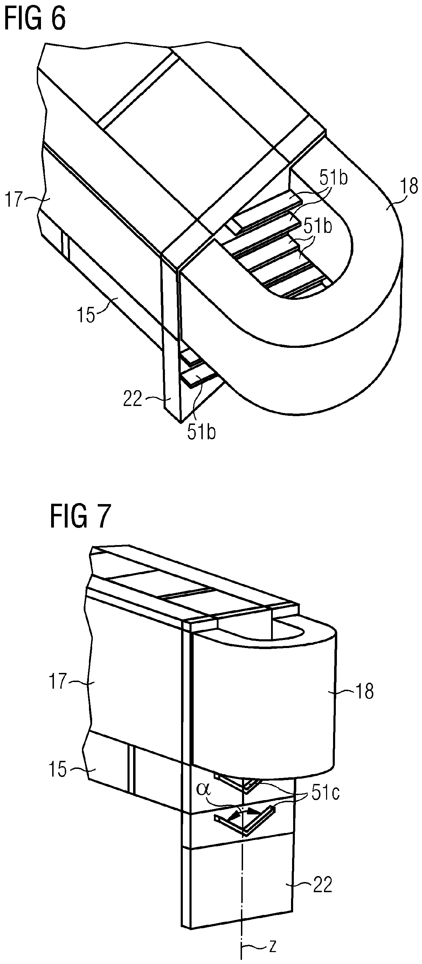

**Figures 5** and **6** show a second configuration of a second plurality of cooling fins 51b. The second cooling fins 51b are inclined with respect to the radial direction Z. The angle of inclination between the radial direction Z and each of the second cooling fins 51b may be comprised between 0 degree and 90 degrees. The second cooling fins 51b may have all the same inclination or different ones.

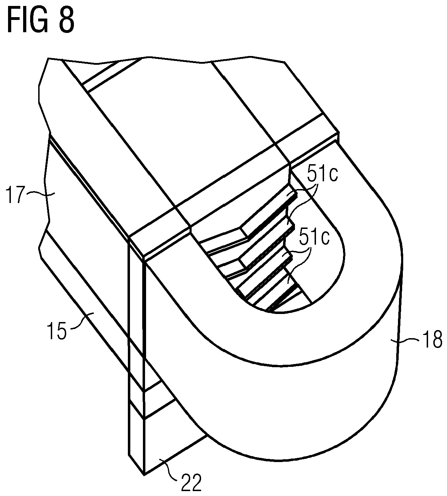

**Figures 7** and **8** show a third configuration of a third plurality of cooling fins 51c. Each of the cooling fins 51c is V-shaped, with two sides joined at a vertex. The axis of symmetry of the cooling fin 51c is oriented according to the radial direction Z. Each cooling fin 51c may have angle α at the vertex comprised between 20 and 160 degrees. According to another embodiment of the present invention (not shown), the axis of symmetry of the cooling fin 51c is inclined with respect to the radial direction Z.

According to other embodiments of the present invention (not shown), each of the cooling fins may have another shape. For example, each cooling fins may be a cylinder protruding from the first axial end plate 22, or may be X-shaped, or W-shaped, or Z-shaped, or a combination of any of the above-mentioned shapes.

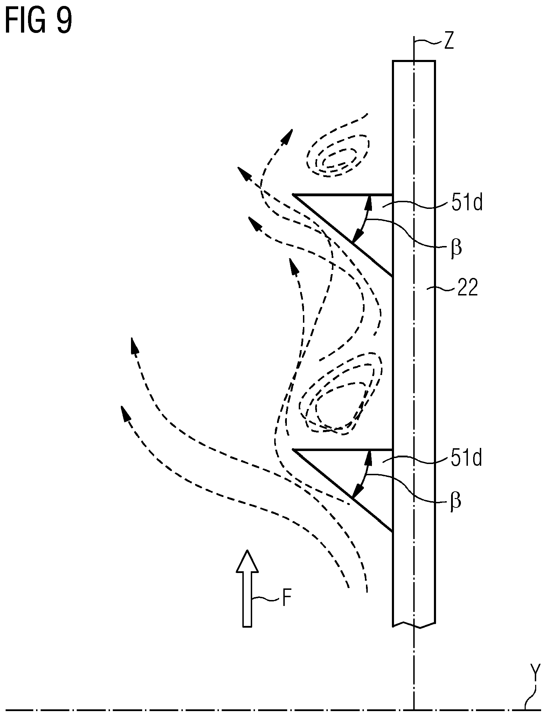

**Figure 9** shows a fourth configuration of a fourth plurality of cooling fins 51d. Each cooling fin 51 d has a longitudinal section comprising an inclined face for guiding an incoming cooling flow F. The longitudinal section of the cooling fin 51d may have a triangular shape having an inclined side facing an incoming cooling flow F. The inclined side may form an angle β with respect to a longitudinal direction which may be comprised between 30 and 60 degrees. Alternatively, the inclined side facing the incoming cooling flow F may be curved, the angle β being variable along the inclined side.

The fourth embodiment may be combined with the first three embodiments above described, i.e. the first, second and third embodiments of the figures 3 to 8 may have a rectangular longitudinal section or a longitudinal section as the one above described with reference to figure 9, in particular a triangular section.

## Claims

1. Electrical generator (10) comprising a stator (20) having a stator body (21) extending axially along a longitudinal axis (Y) between a first axial end plate (22) and a second axial end plate (22), the stator body (21) including a plurality of slots (30), the plurality of slots (30) being circumferentially distributed around the longitudinal axis (Y) of the stator body (21),
the stator (20) including a plurality of windings (17) housed in the plurality of slots (30) and a plurality of end-windings (18) axially protruding from the first axial end plate (22) or the second axial end plate (22), each end winding (18) having a curved shape and connecting the windings (17) in two slots (30) of said plurality of slots (30),
wherein the stator body (21) comprises at least one cooling fin (51a, 51b, 51c, 51d) axially protruding from at least one of the first axial end plate (22) and the second axial end plate (22), the cooling fin (51a, 51b, 51c, 51d) being arranged in at least a portion of the first axial end plate (22) or the second axial end plate (22) at an inside of at least one respective end-winding (18).

2. Electrical generator (10) as claimed in claim 1, wherein the at least one cooling fin (51a) is oriented radially with respect to the longitudinal axis (Y).

3. Electrical generator (10) as claimed in claim 1, wherein the at least one cooling fin (51b, 51c, 51d) is inclined with respect to a radial direction orthogonal to the longitudinal axis (Y).

4. Electrical generator (10) as claimed in claim 3, wherein the at least one cooling fin (51c) is V-shaped, the axis of symmetry of the cooling fin (51c) being oriented radially with respect to the longitudinal axis (Y).

5. Electrical generator (10) as claimed in any of the previous claims, wherein the at least one cooling fin (51d) has a longitudinal section comprising an inclined face for guiding an incoming cooling flow (F).

6. Electrical generator (10) as claimed in claim 5, wherein the longitudinal section of the cooling fin (51d) has a triangular shape having an inclined side facing an incoming cooling flow (F).

7. Electrical generator (10) as claimed in any of the previous claims, wherein at least one cooling fin (51a, 51b, 51c, 51d) is an integral part of the first axial end plate (22) or the second axial end plate (22).

8. Electrical generator (10) as claimed in any of the previous claims 1 to 4, wherein the at least one cooling fin (51a, 51b, 51c, 51d) is attached to the first axial end plate (22) or the second axial end plate (22).

9. Electrical generator (10) as claimed in claim 8, wherein the at least one cooling fin (51a, 51b, 51c, 51d) is made of aluminum.

10. Electric generator (10) as claimed in any of the previous claims, wherein the stator body (21) comprises a plurality of cooling fins (51a, 51b, 51c, 51d) provided at both the first axial end plate (22) or the second axial end plate (22), at least one cooling fin (51a, 51b, 51c, 51d) being provided at the inside of each end-winding (18).

11. Electric generator (10) as claimed in in any of the previous claims, wherein the windings (17) are concentrated windings, each end-winding (18) connecting the windings (17) in two circumferentially adjacent slots (30).

12. Wind turbine (1) comprising an electrical generator (10) according to any of the previous claims.
